# EUROPEAN PATENT APPLICATION

(11) **EP 2 267 694 A2**
(43) Date of publication of application: **29.12.2010**
(21) Application number: 10006342.9
(22) Date of filing: 18.06.2010
(51) Int. Cl.: G10K 3/00

(54) **Pneumatic tapping machine for impact sound generation**

(30) Priority: 24.06.2009 SI 200900173
(71) Applicant: Fausto, Martin, 31046 Oderzo (TV) (IT)
(72) Inventor: Fausto, Martin, 31046 Oderzo (TV) (IT)
(74) Representative: Golmajer Zima, Marjanca

(57) **Abstract**

The subject of the present invention is a Tapping Machine - commonly used to simulate noise from footsteps, particularly for sound insulation measurements - whereby the main advantage is due to its light weight and a reduced external undesired noise. The former because the energy is stored as compressed air in a suitable vessel while the latter is due to the absence of motors turning the cams via a chain or toothed belt drive and the related gearbox.

## Description

### Subject of Invention

The subject of the present invention is a Tapping Machine commonly used to simulate noise from footsteps particularly for sound insulation measurements.

### Technical Problem

A technical problem solved by the invention is to provide a light weight, easy to carry, tapping machine used as impact sound generator that uses compressed air as a source of energy for working with reduced mechanical moving parts wherin the machine will produce less additional mechanical noise.

### Prior Art

Accurate sound insulation measurements are requested in order to meet strict noise regulations currently in force in most European Countries in matter of acoustic insulation in buildings.

A typical standard tapping machine consists in five hammers, each weighting 500 grams, which lift and drop on to the floor twice a second by a motors turning five cams via a belt drive and a related gearbox. Measurement of sound insulation is also governed by international standards (ISO 140 and ISO 3382, among the others) which require the construction industry to obtain reliable results by certain methods.

The tapping machine produces, as well, an inherent mechanical noise, especially on poorly insulated floors, that is picked up during use and distorts the results, regardless the various means of vibration insulation inserts and bushes. The conventional units are powered via the supplied mains adapter, or a heavy optional battery kit, normally having an average life of one hour approximately. Even extended life can be reached, it leads to a rise of the battery stack with consequent increase of the weight to be carried on site. The unit can be remotely switched on and off with cable or wireless through a Remote Control Unit. The unit is normally based around a welded metal chassis. Both size and weight have been minimized for easy transportation but are still relatively relevant.

### Solution to the Technical Problem

The described technical problem is solved by a tapping machine using pressurized fluid, preferably compressed air or gas mixure, stored into a suitable vessel, as energy source; as the specific weight of the air is much smaller compared with the battery stack, also considering the weight of the vessel (typically made of metal, like aluminium or others, in any case negligible) it allows an easy handling and transportation.

During the operation the compressed air is used to supply a vacuum pump, that is connected to a buffer vessel kept in vacuum condition. Five flexible pipe lines link the buffer vessel to the top of each hammer. An electric (or pneumatic) control monostable valve, for vacuum application (type 3/2, normally open) is placed between the ends of each pipe line.

Once the buffer vessel achieves a certain level of vacuum (i.e. -0,5 bar) the hammers are "sucked" to the upper position (actually are lifted upward by the atmospheric pressure); considering the standard size of the hammer (typically a 30 mm diameter cylinder) the equivalent strength acting on the lower cross section can be assumed equal to 3,5 kg, thus enough to push quickly the cylinder in the upper position.

The upper side of the hammer can be provided with a suitable spring or other means in order to reduce the speed while it's approaching the upper position.

Once the machine works, the main control panel (often made by a programmable logic controller or similar devices), electrically operated, just sends a sequential pulse at 2 Hz to each valve. The operation of the valve causes the temporary lost of the vacuum with consequent drop of the hammer from a height of 40 mm, giving an operating frequency of 10±0.3 Hz. This fulfils most national and international standards (i.e. ISO 140, BS 5821, GBJ 75-84, ASTM 492, EN 20140) concerning the tapping machines as impact sound generator.

The undesired noise of the current tapping machines, due to the hammers, operated via tappets on a single or multiple shaft is so avoided. Often such a shaft is driven by a DC motor via a toothed belt and gearbox, also generating undesired noise.

With the present invention no metal-to-metal moving parts, resulting in less wear and smooth operation. More, almost no maintenance is requested due to the absence of many mechanical parts and components compared with the state of the art.

In case of long time operation, the exhausted vessel can be replaced by a new one easily carried on site by the sound engineer or the operator. The exhausted vessel can be also multiple vessels or a multiple stages single vessel. At the end of the measurement process, the exhausted vessels can be refilled just re-pumping them via a small air compressor kept at home.

In any case, the long power cord to the mains supply or the heavy battery stuck of the existing machines is avoided. The disposal fees, at the end of batteries life, are also no longer due, giving a further environmental and economical benefit to the present invention.

Each valve can be equipped with a noise reducer in order to achieve a smoother operating mode.

Just a small battery stack is requested to supply the main control panel and the electric control valves eventually present when the connection to the mains supply would not be possible.

Another awards of the present invention is the use of a buffer vessel, kept at a relative pressure of -0,5 bar or less, whose volume is much bigger compared with the pipe line diameter; such a vessel acts as a "ballast" or vacuum reservoir during operation cycle of the tapping machine. In order to minimize the "vacuum consumption" the valve shall be placed as close as possible to the hammer.

In the existing tapping machine, a mechanical work is done to lift the hammers with consequent loss of energy, besides the motor, the shaft, the belt and the gearbox; in the present invention the energy is used just to operate the valves while the atmospheric pressure does most of the work.

Another embodiment of the present invention comprises the preliminary vacuum of the air tank or the buffer vessel using the air compressor out of the operating time; in such a manner the pressurized vessel will energize the vacuum pump just to balance the loss of the vacuum while the machine is operating. In any case such an embodiment does not affect the main principle of the present invention; in the same way, the presence of other equipment like pressure switches, pressure regulators, gauges, diaphragms will not affect the main principle of the present invention.

The above and other objects, features and advantages of the present invention will become apparent from the following descriptions with reference to the accompanying drawing, which illustrate an examples of the present invention.

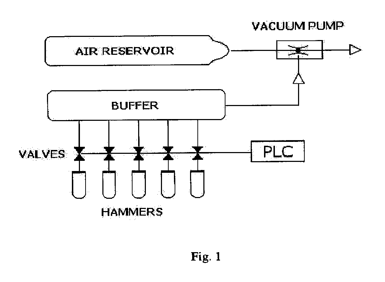

- FIG. 1: presents a schematic sectional view showing an example of the tapping machine described in the present invention.

The following description concerns the details of a typical tapping machine of the present invention with reference to FIG. 1 where a schematic view showing a typical diagram concerning the main parts of the tapping machine.

A pressurized air tank (1) is connected to a single stage ejector vacuum pump (2) operating with filtered and non lubricated air; the bottom inlet nozzle is connected to the vacuum reservoir vessel (3). Five pipes (6), departing from the vacuum reservoir vessel (3) go the valves (4) set over the hammers (5). The valves (4) can be driven by a programmable logic controller (6) or similar device supplied by battery cells or grid connected. The hammers (5) are kept vertically by mean of suitable rails (not shown).

While a preferred embodiment of the present invention has been described using specific terms, such description is for illustrative purposes only, and it is to be understood that changes and variations may be made without departing from the spirit of scope of the claims. Variations of the machine above described, including all the possible combinations, may be used without departing from the spirit of scope of the claims. In the same way, the pressure of any of the parts above described, the presence of additional equipment as well as any improvement, will not affect the spirit of scope of the claims.

## Claims

1. A tapping machine used as impact sound generator to simulate noise from footsteps, **characterised in that** it comprises
- a pressurized vessel (1),
- a vacuum reservoir vessel (3) mutually connected over a vacuum pump (2), preferably a single stage ejector vacuum pump powered by compressed fluid or electricity,
- at least one hammer (5), preferably five hammers, each of them connected with vacuum reservoir vessel (3) by a pipe line,
- at least one valves (4), preferably five valves, placed between ends of each pipe line (6),
- a control panel (7)
whereby a pressurized fluid is used as energy source for operating some or all the mechanical parts.

2. A tapping machine according to claim 2, **characterised in that**, a pressurized fluid stored in the pressurized vessel (1) is a pressurized air or a pressurized mixture of gases.

3. A tapping machine according to claim 1, **characterised in that**, the valve (4) is either electric or pneumatic type.

4. A tapping machine according to claim 3, **characterised in that**, the valve (4) is driven by a programmable logic controller (6) or similar device supplied by battery cells or grid connected.

5. A tapping machine according to claim 2, **characterised in that**, the a vacuum reservoir vessel (3) is an air compressor.

6. A tapping machine according to claim 2, **characterised in that,** the a vacuum reservoir vessel (3) is a replaceable vessel, multiple vessels or a multiple stages single vessel.

7. Use of a tapping machine produced according to preceding claims.
